(19) Europäisches Patentamt
European Patent Office
Office européen des brevets

(11) Veröffentlichungsnummer: **0 007 044**
**B1**

(12) # EUROPÄISCHE PATENTSCHRIFT

(45) Veröffentlichungstag der Patentschrift: **25.08.82**

(51) Int. Cl.³: **C 08 F 236/04,** C 08 F 212/02, C 08 F 2/22

(21) Anmeldenummer: **79102179.3**

(22) Anmeldetag: **29.06.79**

(54) **Verfahren zur Herstellung stippenfreier Kautschuklatices mit hoher Oberflächenspannung.**

(30) Priorität: **11.07.78 DE 2830393**

(43) Veröffentlichungstag der Anmeldung: **23.01.80 Patentblatt 80/2**

(45) Bekanntmachung des Hinweises auf die Patenterteilung: **25.08.82 Patentblatt 82/34**

(84) Benannte Vertragsstaaten: **BE DE FR GB IT NL SE**

(56) Entgegenhaltungen:
**DE-A-1 814 200**
**US-A-2 380 905**

(73) Patentinhaber: **BAYER AG, Zentralbereich Patente, Marken und Lizenzen, D-5090 Leverkusen 1, Bayerwerk (DE)**

(72) Erfinder: **Heins, Ferdinand, Dr., Adalbert-Stifter-Strasse 49, D-4006 Erkrath 1 (DE)**

EP 0 007 044 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung stippenfreier Kautschuklatices mit hoher Oberflächenspannung

Die vorliegende Erfindung betrifft ein Verfahren zur Herstellung im wesentlichen stippenfreier carboxylierter Kautschuklatices aus acyclischen konjugierten Dienen, Arylvinylmonomeren und/oder (Meth)acrylnitril durch Emulsionspolymerisation in Gegenwart einer Mercaptocarbonsäure der allgemeinen Formel

$$HS-(CH_2)_x-CO_2H$$

worin
x eine ganze Zahl von 1 bis 5 bedeutet,

und/oder ihrer wasserlöslichen Salze.

Üblicherweise werden bei der konventionellen Emulsionspolymerisation die Monomeren in Gegenwart eines freie Radikale liefernden Initiators und eines Emulgiermittels polymerisiert, welches die gebildeten Polymerpartikel in dispergiertem Zustand hält. Die Anwesenheit von Emulgatoren führt jedoch zu einer oftmals unerwünschten Herabsetzung der Oberflächenspannung. Insbesondere bei carboxylierten Kautschuklatices, die nach der Herstellung in saurem Milieu durch Zugabe von Base neutral oder alkalisch eingestellt werden, tritt eine Verminderung der Oberflächenspannung auf. Man benötigt jedoch carboxylierte Kautschuklatices mit hoher Oberflächenspannung, da nur sie infolge ihrer geringen Neigung zum Schäumen eine einwandfreie Verarbeitbarkeit, beispielsweise auf schnellaufenden Maschinen, ermöglichen.

Die Verwendung einer großen Menge anionischer Emulgatoren, beispielsweise vom Sulfat- oder Sulfonattyp ist im allgemeinen erforderlich, um die Bildung von Koagulat und Stippen zu vermeiden. Durch diese Maßnahme wird jedoch die Oberflächenspannung der Latices stark herabgesetzt, so daß Verarbeitungsschwierigkeiten auftreten, die Polymerfilme meist eine erheblich verminderte Naßfestigkeit aufweisen und die Haftung der als Binder eingesetzten Polymerisate auf den Substraten verringert wird. Es ist zwar möglich, den Anteil an anionischen Emulgatoren durch nichtionogene Emulgatoren, wie z. B. Polyglykolether von Fettalkoholen oder langkettigen alkylsubstituierten Phenolen zurückzudrängen, doch führen größere Mengen nichtionogener Emulgatoren ebenfalls zu einem Abfall der Oberflächenspannung der erhaltenen Latices und zu einer Herabsetzung der Wasserfestigkeit und der Haftung damit hergestellter Filme.

Man hat sich deshalb stets bemüht, die Polymerisation in Gegenwart von nur geringen Mengen an Emulgatoren oder ohne Emulgatoren durchzuführen. Dies erfordert jedoch im allgemeinen verlängerte Reaktionszeiten und die so hergestellten Dispersionen neigen zu Instabilität, die sich in einer Koagulat- oder Stippenbildung äußert. Während man vom Koagulat in den meisten Fällen noch leicht abfiltrieren kann, ist die Entstehung von Stippen besonders unerwünscht, da sich Stippen mit einem Teilchendurchmesser zwischen 10 und 100 µm nur sehr schwer abtrennen lassen und zu Verarbeitungsschwierigkeiten sowie inhomogenen Polymerfilmen führen. Um eine akzeptable Raum/Zeit-Ausbeute zu erhalten, wird eine emulgatorarme oder emulgatorfreie Polymerisation im allgemeinen nur bei hohen Polymerisationstemperaturen (oberhalb von etwa 50° C) durchgeführt. Bei diesen hohen Temperaturen wirken jedoch die üblicherweise verwendeten Molekulargewichtsregler, wie z. B. tert.-Dodecylmercaptan, stark reaktionsverzögernd, so daß die ohnehin schon herabgesetzte Polymerisationsgeschwindigkeit noch weiter vermindert wird und im Laufe der Polymerisation doch eine Stippenbildung eintritt. Die Verminderung der Polymerisationsgeschwindigkeit läßt sich zwar durch Erhöhung der Menge an Polymerisationsinitiator, beispielsweise eines Peroxodisulfat kompensieren, doch nimmt dadurch ebenfalls der Koagulat- und Stippenanteil zu.

Aus der DE-AS 2 015 660 ist es bekannt, daß man stippenfreie Polymerlatices mit hoher Oberflächenspannung herstellen kann, indem man die Polymerisation in Gegenwart einer ausreichenden Menge bestimmter Emulgatoren durchführt, beispielsweise den Salzen von $\alpha$-Sulfofettsäuren oder deren Estern. Auf diese Weise werden jedoch relativ feinteilige Latices erhalten, so daß die mechanische Stabilität zurückgeht und die Viskosität ansteigt. Die Vorteile emulgatorarmer und vor allem emulgatorfreier Latices wie besonders schnelle Trocknung, Härtung wesentlich verbesserte Wasserfestigkeit und eine ungleich höhere Haftung der Polymerisate auf den jeweiligen Substraten lassen sich mit diesen Latices überdies nicht erreichen.

Gemäß der DE-AS 1 814 209 kann durch Verwendung von geringen Mengen (bis zu 0,1 Gew.-% bezogen auf Monomere) eines Emulgators vom Sulfonattyp zusammen mit geringen Mengen an wasserlöslichen Eisensalzen ($10^{-5}$ bis $10^{-1}$ Gew.-%) die Stippenbildung zurückgedrängt werden. Die Verwendung von Eisensalzen führt jedoch zu Polymerisaten, die in verstärktem Maße zur Verfärbung neigen.

Aus dem US-Patent 2 380 905 ist es bekannt, die Polymerisation von Butadien-(1,3) allein oder in Kombination mit geeigneten Monomeren in Gegenwart bestimmter wasserlöslicher, schwefelhaltiger Verbindungen wie z. B. Mercaptogruppen tragenden Mono- oder Dicarbonsäuren und gegebenenfalls wasserunlöslichen Kettenübertragungsmitteln durchzuführen, um die Polymerisationszeiten z

verringern und die Verarbeitungseigenschaften der isolierten Kautschuke zu verbessern.

Aus dem US-Patent 2 635 090 ist es bekannt, bei der Herstellung von Polyacrylnitril und Copolymeren von Acrylnitril durch Suspensionspolymerisation Mercaptocarbonsäuren, deren Ester und wasserlösliche Salze als Molekulargewichtsregler zu verwenden, um farblose Polymere mit verbesserten physikalischen Eigenschaften und guten Löslichkeiten in Lösungsmitteln für Polyacrylnitrilfasern zu erhalten.

Aus dem US-Patent 3 388 109 ist es bekannt, bei Polymerisationen, die unterhalb von 50°C durchgeführt werden, Wasserstoffperoxid in Kombination mit einer Mercaptocarbonsäure als Initiatorsystem zu verwenden, um farbstabile Polymerisate in hohen Ausbeuten und angemessenen Polymerisationszeiten zu erhalten.

Gemäß US-Patent 3 409 705 kann eine Initiatorkombination aus Wasserstoffperoxid und Thioglykolsäure auch zur Herstellung von Zweiphasenkunststoffen durch Pfropfpolymerisation geeigneter Monomerer auf einen Kautschuklatex verwendet werden.

Gemäß US-Patent 3 501 432 kann u. a. Thioglykolsäure bei der emulgatorfreien Copolymerisation von (Meth)acrylsäureestern, (Meth)acrylsäure oder (Meth)acrylsäurehydroxyalkylestern verwendet werden, um stabilisierende dissoziierende Endgruppen in die Polymerisate einzuführen.

Es wurde nun gefunden, daß carboxylierte Kautschuklatices mit hoher Oberflächenspannung durch emulgatorfreie oder emulgatorarme Polymerisation hergestellt werden können, ohne daß nennenswerte Mengen an Koagulat oder Stippen auftreten, wenn man die Polymerisation oberhalb von 50°C und in Gegenwart eines Peroxodisulfats und einer Mercaptocarbonsäure der allgemeinen Formel

$$HS-(CH_2)_x-CO_2H$$

worin
x eine ganze Zahl von 1 bis 5 bedeutet,

und/oder ihrer wasserlöslichen Salze durchführt. Wasserlösliche Salze sind beispielsweise die Alkalimetall- oder Ammoniumsalze derartiger Mercaptocarbonsäuren.

Es ist überraschend, daß selbst durch geringe Mengen der Mercaptocarbonsäure (weniger als 0,1 Gew.-%, bezogen auf eingesetzte Monomere) die Tendenz zur Stippenbildung bei warm polymerisierten emulgatorarmen oder emulgatorfreien carboxylierten Latices aus einem acyclischen konjugierten Dien und einem Arylvinylmonomer und/oder (Meth)acrylnitril so drastisch verringert wird. Insbesondere bei der emulgatorfreien Polymerisation mit erhöhten Anteilen an Peroxodisulfat, welches normalerweise zu einer vermehrten Stippenbildung führt, erwies sich der Einsatz einer Mercaptocarbonsäure als besonders vorteilhaft.

Bei dem erfindungsgemäßen Verfahren kann das Verhältnis von konjungiertem Dien zu Arylvinylmonomer und/oder (Meth)acrylnitril in sehr weiten Grenzen variiert werden. Dementsprechend erlaubt die vorliegende Erfindung die Herstellung von solchen Kautschuklatices aus den o. g. Monomeren, welche 10 bis 90 Gew.-% eines oder mehrerer acyclischer konjugierter Diene mit 4 bis 9 Kohlenstoffatomen, 10 bis 90 Gew.-% eines oder mehrerer Arylvinylmonomerer mit 8 bis 12 Kohlenstoffatomen und/oder (Meth)acrylnitril enthalten, wobei die Menge an (Meth)acrylnitril maximal 50 Gew.-% beträgt.

Gegenstand der Erfindung ist somit ein Verfahren zur Herstellung im wesentlichen stippenfreier carboxylierter Kautschuklatices mit hoher Oberflächenspannung durch Polymerisation eines Monomerengemisches aus 0,5 bis 10 Gew.-% einer oder mehrerer $\alpha,\beta$-monoethylenisch ungesättigter Mono- oder Dicarbonsäuren und 90 bis 99,5 Gew.-% eines Gemisches aus 10 bis 90 Gew.-% eines oder mehrerer acyclischer konjungierter Diene mit 4 bis 9 Kohlenstoffatomen und 10 bis 90 Gew.-% eines oder mehrerer Arylvinylmonomerer mit 8 bis 12 Kohlenstoffatomen und/oder (Meth)acrylnitril, wobei die Menge an (Meth)acrylnitril maximal 50 Gew.-% beträgt, in wäßriger Phase in Gegenwart von 0 bis 0,5 Gew.-%, bezogen auf Gesamtmonomere, eines oder mehrerer wasserlöslicher Emulgatoren vom Sulfat- und/oder Sulfonattyp, dadurch gekennzeichnet, daß man die Polymerisation bei einer Temperatur oberhalb von 50°C unter Verwendung eines Peroxodisulfats als Initiator durchführt in Gegenwart einer Mercaptocarbonsäure der Formel

$$HS-(CH_2)_x-CO_2H$$

worin
x eine ganze Zahl von 1 bis 5 bedeutet,

und/oder ihrer wasserlöslichen Salze.

Geeignete Mercaptocarbonsäuren sind beispielsweise $\beta$-Mercaptopropionsäure und vorzugsweise Thioglykolsäure. Sie werden in einer Menge von 0,01 bis 1,0 Gew.-%, bezogen auf die Gesamtmenge an Monomeren, eingesetzt.

Die Gesamtmenge des bei dem erfindungsgemäßen Verfahren als Initiator verwendeten

Peroxodisulfats beträgt 0,5 bis 3,0 Gew.-%, bezogen auf die Gesamtmenge an Monomeren. Als Initiatoren geeignet sind Salze der Peroxodischwefelsäure wie Natrium-, Kalium- oder bevorzugt Ammoniumperoxodisulfat. Gegebenenfalls können die Initiatoren in Kombination mit Reduktionsmitteln, wie z. B. Schwefeldioxid, Alkalidisulfiten und Alkali- und Ammoniumhydrogensulfiten, eingesetzt werden.

Geeignete acyclische konjugierte Diene mit 4 bis 9 Kohlenstoffatomen sind z. B. Butadien-(1,3), 2-Methylbutadien-(1,3), (Isopren), 2,3-Dimethylbutadien-(1,3), Piperylen, 2-Neopentylbutadien-(1,3) und andere substituierte Diene wie beispielsweise 2-Chlorbutadien-(1,3) (Chloropren), 2-Cyanobutadien-(1,3) sowie substituierte geradkettige konjugierte Pentadiene und geradkettige oder verzweigte Hexadiene. Die Fähigkeit, mit Arylvinylmonomeren und (Meth)acrylnitril besonders gut zu polymerisieren, machen Butadien-(1,3) zum bevorzugten Monomer.

Geeignete Arylvinylmonomere sind solche, bei denen die gegebenenfalls in α-Stellung alkylsubstituierte Vinylgruppe direkt an einen aus 6 bis 10 Kohlenstoffatomen bestehenden aromatischen Kern gebunden ist. Beispielhaft seien genannt: Styrol und substituierte Styrole wie 4-Methylstyrol, 3-Methylstyrol, 2,4-Dimethylstyrol, 2,4-Diethylstyrol, 4-Isopropylstyrol, 4-Chlorstyrol, 2,4-Dichlorstyrol, Divinylbenzol, α-Methylstyrol und Vinylnaphthalin. Aus Gründen der Zugänglichkeit und wegen der Fähigkeit, insbesondere mit Butadien-(1,3) hervorragend zu copolymerisieren, stellt Styrol das bevorzugte Monomere dar.

Als α,β-monoethylenisch ungesättigte Mono- und Dicarbonsäuren eignen sich beispielsweise Acrylsäure, Methacrylsäure, Itaconsäure, Fumarsäure und Maleinsäure sowie die Monoester der erwähnten Dicarbonsäuren, wie z. B. Monoalkylitaconat, -fumarat und -maleat.

Bis zu 25 Gew.-% der nicht-dissoziierenden Monomeren können durch eines oder mehrere von mit den oben angeführten Monomeren copolymerisierbaren Monomeren ersetzt sein. Hierzu zählen insbesondere Ester der Acryl- und/oder Methacrylsäure von Alkoholen mit bis zu 8 Kohlenstoffatomen sowie Diester aus Alkandiolen und α,β-monoethylenisch ungesättigten Monocarbonsäuren wie Ethylenglykoldiacrylat und Butandiol-(1,4)-diacrylat, Amide der α,β-monoethylenisch ungesättigten Mono- und Dicarbonsäuren wie Acrylamid und Methacrylamid und deren N-Methylolderivate sowie N-Alkoxymethyl- und N-Acyl-(meth)acrylamide mit 1 bis 4 Kohlenstoffatomen in der Alkoxygruppe, z. B. N-Methylol-(meth)acrylamid, N-Methoxymethyl-(meth)acrylamid, N-n-Butoxymethyl-(meth)acrylamid und N-Acetoxymethyl-(meth)acrylamid. Als weitere Comonomere kommen Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinylverbindungen wie Vinylpyridin in Betracht.

Das erfindungsgemäße Verfahren wird bei Temperaturen oberhalb 50°C und bei pH-Werten von 2 bis 7 durchgeführt, da nur bei niedrigen pH-Werten die ethylenisch ungesättigten Carbonsäuren in den wasserunlöslichen Monomeren teilweise gelöst sind. Bei diesen pH-Werten sind als gegebenenfalls zu verwendende Emulgatoren solche geeignet, die sich von stark dissoziierenden Säuren ableiten, insbesondere Emulgatoren vom Sulfat- und Solfonattyp. Typische Vertreter sind höhere Fettalkoholsulfate, höhere Alkylsulfonate und Alkylarylsulfonate sowie deren Kondensationsprodukte mit Formaldehyd, höhere Hydroxylalkylsulfonate, Salze der Sulfobernsteinsäureester und sulfatierte Ethylenoxidaddukte. Im allgemeinen werden nicht mehr als 0,5 Gew.-% an Emulgatoren, bezogen auf Gesamtmonomere, eingesetzt.

Gegebenenfalls kann die Emulsionspolymerisation in Gegenwart von Polymerisationshilfsmitteln wie Puffersubstanzen, Chelierungsmitteln und Beschleunigern durchgeführt werden. Ebenso können Kettenübertragungsmittel wie z. B. Tetrabrommethan, Brommethylbenzol, Alkohole, höhere Alkylmercaptane und Dialkyldixanthogenate bei der Polymerisation mitverwendet werden. Die zu verwendende Art und Menge hängt u. a. von der Wirksamkeit der Verbindungen und der Menge des eingesetzten Diens ab und ist dem Fachmann geläufig.

Nach Beendigung der Polymerisation kann gegebenenfalls bei einem pH-Wert von 6 bis 8 der Latex in an sich bekannter Weise von Restmonomeren befreit und zur Erhöhung seiner mechanischen Stabilität auf einen pH-Wert von etwa 8 bis 10 eingestellt werden.

Die nach dem erfindungsgemäßen Verfahren erhaltenen Dispersionen haben bei pH-Werten über 6,0 eine Oberflächenspannung von 45 bis 70, bevorzugt von 50 bis 60 mN/m. Ihr Feststoffgehalt kann zwischen 1 und 65 Gew.-% liegen und beträgt vorzugsweise 30 bis 50 Gew.-%. Die Latices, die weitgehend oder vollständig frei von Koagulat und Stippen sind, eignen sich u. a. zur Bindung von Vliesen, zur Imprägnierung und Beschichtung von textilen Materialien und Papier und zur Herstellung von wäßrigen Anstrichbinderformulierungen.

Die folgenden Beispiele erläutern das erfindungsgemäße Verfahren.

## Beispiel 1

In einem 40-l-Autoklaven aus rostfreiem Stahl mit Kreuzbalkenrührer werden 13 500 g Wasser und 1900 g Styrol vorgelegt, der Autoklav evakuiert und mit Stickstoff gespült. Anschließend drückt man 3000 g Butadien-(1,3) auf und erhitzt den Kesselinhalt auf 80°C. Nach Erreichen dieser Temperatur

werden 111 g 90%iger Methacrylsäure in 250 g Wasser und 120 g Ammoniumperoxodisulfat und 30 ml 25%iger wäßriger Ammoniak-Lösung in 500 g Wasser zugedrückt und der Ansatz bei 80°C polymerisiert, bis nach etwa 3,5 Stunden eine Feststoffkonzentration von 17 Gew.-% erreicht ist. Dann wird ein Gemisch aus 3000 g Butadien-(1,3), 1900 g Styrol, 111 g 90%iger Methacrylsäure und 20 g tert.-Dodecylmercaptan zugefügt und die Emulsion erneut mit 50 g Ammoniumperoxodisulfat und 40 ml 25%iger wäßriger Ammoniak-Lösung in 500 g Wasser versetzt. Nach 25 Stunden ist eine Feststoffkonzentration von 40,1 Gew.-% erreicht, und die Polymerisation wird durch Zugabe von 280 g 7%iger Diethylhydroxylamin-Lösung abgestoppt. Bei der Polymerisation entstehen 180 g Ausscheidungen (feucht gewogen) sowie Stippen. Der Latex wird mit verdünnter, wäßriger Ammoniak-Lösung annähernd neutralisiert, von Restmonomeren befreit und mit verdünnter, wäßriger Ammoniak-Lösung auf pH 9,2 eingestellt. Der Feststoffgehalt beträgt danach 37,7 Gew.-%, die Oberflächenspannung liegt bei 45,2 mN/m.

## Beispiel 2

In einem 40-l-Autoklaven aus rostfreiem Stahl mit Kreuzbalkenrührer werden 13 500 g Wasser und 1900 g Styrol vorgelegt, der Autoklav evakuiert und mit Stickstoff gespült. Anschließend werden 3000 g Butadien-(1,3) aufgedrückt. Man erwärmt den Kesselinhalt auf 80°C und drückt 111 g 90%iger Methacrylsäure in 200 g Wasser sowie 120 g Ammoniumperoxodisulfat und 30 ml 25%iger wäßriger Ammoniak-Lösung in 500 g Wasser zu. Nach einer Polymerisationszeit von 5 Stunden beträgt die Feststoffkonzentration 19 Gew.-%. Dann wird eine Mischung aus 3000 g Butadien-(1,3), 1900 g Styrol und 20 g tert.-Dodecylmercaptan zugefügt. Anschließend drückt man eine Lösung von 50 g Ammoniumperoxodisulfat und 100 ml 25%iger wäßriger Ammoniak-Lösung in 300 g Wasser sowie eine Lösung von 111 g 90%iger Methacrylsäure und 20 g Thioglykolsäure in 200 g Wasser in den Autoklaven. Nach 30 Stunden ist eine Feststoffkonzentration von 39,2 Gew.-% erreicht. Daraufhin wird die Polymerisation durch Zugabe von 280 g 7%iger Diethylhydroxylamin-Lösung abgestoppt. Der Koagulatanteil beträgt 123 g (feucht gewogen), die Dispersion ist jedoch völlig stippenfrei. Nach Abtrennung der Restmonomeren wird der Latex mit verdünnter, wäßriger Ammoniak-Lösung auf pH 9,2 eingestellt. Der Feststoffgehalt beträgt 37,6 Gew.-%, die Oberflächenspannung 49,3 mN/m.

## Beispiel 3

Der Versuch von Beispiel 2 wird ohne Zugabe von tert.-Dodecylmercaptan wiederholt. Dadurch verringert sich die Polymerisationszeit bis zum Erreichen einer Feststoffkonzentration von 37,5 Gew.-% auf 11 Stunden. Nach Abstoppen der Polymerisation und Aufarbeiten wie in Beispiel 2 wird ein ebenfalls völlig stippenfreier Latex erhalten. Sein Koagulatanteil beträgt 100 g (feucht gewogen). Mit wäßriger Ammoniak-Lösung wird ein pH von 9,0 eingestellt. Der Latex hat einen Feststoffgehalt von 37,1 Gew.-% und eine Oberflächenspannung von 53,3 mN/m.

In der folgenden Tabelle sind die Ergebnisse der Beispiele 1 bis 3 zusammengefaßt.

Tabelle

| | Beispiel 1 | Beispiel 2 | Beispiel 3 |
|---|---|---|---|
| tert.-Dodecylmercaptan [Gew.-%] | 0,2 | 0,2 | – |
| Thioglykolsäure [Gew.-%] | – | 0,2 | 0,2 |
| Polymerisationszeit [h] | 28,5 | 35 | 11 |
| Feststoffkonzentration [Gew.-%] | 37,7 | 37,6 | 37,1 |
| pH-Wert | 9,2 | 9,2 | 9,0 |
| Oberflächenspannung [mN/m] | 45,2 | 49,3 | 53,3 |
| Stippen | ja | nein | nein |

Beispiel 4

Ein 40-l-Autoklav aus rostfreiem Stahl mit Kreuzbalkenrührer wird mit einer Mischung aus 12 500 g Wasser, 1000 g Styrol und 900 g Acrylnitril beschickt. Nach Evakuieren und Spülen mit Stickstoff werden 3000 g Butadien-(1,3) aufgedrückt und der Kesselinhalt auf 75°C erwärmt. Anschließend werden eine Lösung aus 111 g 90%iger Methacrylsäure in 250 g Wasser und eine Lösung von 50 g Ammoniumperoxodisulfat und 30 ml 25%iger wäßriger Ammoniak-Lösung in 300 g Wasser zugedrückt. Nach einer Polymerisationszeit von 5 Stunden bei 75°C ist eine Feststoffkonzentration von 23 Gew.-% erreicht. Daraufhin werden eine Mischung aus 3000 g Butadien-(1,3), 1000 g Styrol, 900 g Acrylnitril und 10 g tert.-Dodecylmercaptan, eine Lösung von 100 g Methacrylamid in 400 g Wasser sowie eine Lösung von 1000 g Ammoniumperoxodisulfat und 30 ml 25%iger wäßriger Ammoniak-Lösung in 300 g Wasser zugefügt. Nach weiteren 9 Stunden Polymerisationszeit (2. Polymerisationsphase) beträgt der Feststoffgehalt 41,0 Gew.-%. Daraufhin wird die Polymerisation mit 280 g 7%iger Diethylhydroxylamin-Lösung abgestoppt. Nach Befreien von Restmonomeren wird der Latex mit verdünnter, wäßriger Ammoniak-Lösung auf pH 7,6 eingestellt. Die Dispersion weist bei einem Feststoffgehalt von 40,3 Gew.-% einen Koagulatanteil von 320 g (feucht gewogen) und einen erheblichen Stippenanteil auf. Die Oberflächenspannung beträgt 51,9 mN/m.

Beispiel 5

Der Versuch von Beispiel 4 wird wiederholt. Vor der 2. Polymerisationsphase werden jedoch zusätzlich 10 g Thioglykolsäure und 10 ml 25%iger wäßriger Ammoniak-Lösung zugegeben. Die Polymerisation wird wie in Beispiel 4 abgestoppt und der Latex nach Befreien von Restmonomeren mit verdünnter wäßriger Ammoniak-Lösung auf einen pH-Wert von 7,5 eingestellt. Die Ausscheidungen betragen 200 g (feucht gewogen), der Stippenanteil ist jedoch wesentlich geringer als im Beispiel 4. Die Oberflächenspannung liegt bei 52,9 mN/m.

Beispiel 6

In einem 40-l-Autoklaven aus rostfreiem Stahl mit Kreuzbalkenrührer werden 12 500 g Wasser, 1000 g Acrylnitril und 10 g tert.-Dodecylmercaptan vorgelegt, nach Evakuieren und Spülen mit Stickstoff, 2200 g Butadien-(1,3) aufgedrückt und der Kesselinhalt auf 75°C erwärmt. Dann fügt man rasch hintereinander eine Lösung von 222 g 90%iger Methacrylsäure in 500 g Wasser sowie 50 g Ammoniumperoxodisulfat und 30 ml 25%iger wäßriger Ammoniak-Lösung in 500 g Wasser hinzu. Nach einer Polymerisationszeit von 5 Stunden ist ein Feststoffgehalt von 15 Gew.-% erreicht. Dann wird eine Mischung aus 2200 g Butadien-(1,3), 1100 g Acrylnitril, 25 g tert.-Dodecylmercaptan und 2,5 g Thioglykolsäure zugedrückt und eine Lösung von 50 g Ammoniumperoxodisulfat und 15 ml 25%iger wäßriger Ammoniak-Lösung in 250 g Wasser zugegeben. Nach weiteren 3 Stunden ist eine Feststoffkonzentration von 30 Gew.-% erreicht. Danach wird ein Gemisch aus 2200 g Butadien-(1,3), 1000 g Acrylnitril, 100 g N-Methoxymethyl-methacrylamid, 25 g tert.-Dodecylmercaptan und 2,5 g Thioglykolsäure aufgedrückt und nochmals eine Lösung von 50 g Ammoniumperoxodisulfat und 15 m 25%iger wäßriger Ammoniak-Lösung in 250 g Wasser zugefügt. Nach 5,5 Stunden wird eine Endkonzentration von 40,5 Gew.-% Feststoff erreicht, wenn man bei etwa 38 Gew.-% Feststoffgehalt mit einer Lösung von 20 g Ammoniumperoxodisulfat in 100 g Wasser nachaktiviert. Bei dieser Arbeitsweise wird ein Latex erhalten, welcher weder Koagulat noch Stippen aufweist. Nach Abstoppen der Polymerisation, wie in Beispiel 4, Befreien von Restmonomeren und Einstellung eines pH-Wertes von 9,0 mit verdünnter wäßriger Ammoniak-Lösung besitzt die Dispersion einen Feststoffgehalt von 40,7 Gew.-% und eine Oberflächenspannung von 55,3 mN/m.

Beispiel 7

In einem 40-l-Autoklaven aus rostfreiem Stahl mit Kreuzbalkenrührer werden 15 g Natrium-Paraffinsulfonat mit durchschnittlich 15 Kohlenstoffatomen im Alkylrest in 8250 g Wasser vorgelegt. Nac Evakuieren und Spülen mit Stickstoff werden 10 Gew.-Teile eines Gemisches 1 aus 9000 g Styro 5550 g Butadien-(1,3), 500 g 90%iger Methacrylsäure, 60 g Thioglykolsäure und 15 g tert.-Dodecylme captan zugedrückt, der Kesselinhalt auf 80°C erwärmt und die Polymerisation mit einer Lösung vo 15 g Ammoniumperoxodisulfat und 30 ml 25%iger wäßriger Ammoniak-Lösung in 450 g Wass gestartet. Anschließend läßt man gleichzeitig den Rest des Gemisches 1 und ein Gemisch 2 aus 225 Ammoniumperoxodisulfat, 45 g Natrium-Paraffinsulfonat und 165 ml 25%iger wäßriger Ammoniak-Lösung in 6000 g Wasser gleichmäßig in 8 Stunden zulaufen. Nach beendeter Zugabe wird noch 4 bis Stunden bei 80°C nachgerührt und die Polymerisation mit 320 g 7%iger Diethylhydroxylamin-Lösur bei einem Feststoffgehalt von 45,8 Gew.-% abgestoppt. Nach Befreien von restlichen Monomere

wird ein nahezu stippenfreier Latex erhalten, der von geringen Ausfällungen leicht befreit werden kann. Dieser Latex besitzt einen pH-Wert von 6,0 und eine Oberflächenspannung von 49,1 mN/m.

**Patentansprüche**

1. Verfahren zur Herstellung im wesentlichen stippenfreier carboxylierter Kautschuklatices mit hoher Oberflächenspannung durch Polymerisation eines Monomerengemisches aus 0,5 bis 10 Gew.-% einer oder mehrerer $\alpha,\beta$-monoethylenisch ungesättigter Mono- oder Dicarbonsäuren und 90 bis 99,5 Gew.-% eines Gemisches aus 10 bis 90 Gew.-% eines oder mehrerer acyclischer konjugierter Diene mit 4 bis 9 Kohlenstoffatomen und 10 bis 90 Gew.-% eines oder mehrerer Arylvinylmonomerer mit 8 bis 12 Kohlenstoffatomen und/oder (Meth)acrylnitril, wobei die Menge an (Meth)acrylnitril maximal 50 Gew.-% beträgt, in wäßriger Phase in Gegenwart von 0 bis 0,5 Gew.-%, bezogen auf Gesamtmonomere, eines oder mehrerer wasserlöslicher Emulgatoren vom Sulfat- und/oder Sulfonat-Typ, dadurch gekennzeichnet, daß man die Polymerisation bei einer Temperatur oberhalb von 50°C unter Verwendung eines Peroxodisulfats als Initiator durchführt in Gegenwart einer Mercaptocarbonsäure der Formel

$$HS-(CH_2)_x-CO_2H$$

worin
x eine ganze Zahl von 1 bis 5 bedeutet,

und/oder ihrer wasserlöslichen Salze.

2. Verfahren nach Anspruch 1, dadurch gekennzeichnet, daß bis zu 25 Gew.-% der nicht-dissoziierenden Monomeren durch andere copolymerisierbare Monomere ersetzt werden.

3. Verfahren nach Anspruch 1 und 2, dadurch gekennzeichnet, daß die Gesamtmenge des als Initiator verwendeten Peroxodisulfats 0,5 bis 3,0 Gew.-%, bezogen auf die Gesamtmenge an Monomeren, beträgt.

4. Verfahren nach Anspruch 1 bis 3, dadurch gekennzeichnet, daß es in Gegenwart von insgesamt 0,01 bis 1,0 Gew.-% Mercaptocarbonsäure, bezogen auf die Gesamtmenge an Monomeren, durchgeführt wird.

5. Verfahren nach Anspruch 1 bis 4, dadurch gekennzeichnet, daß als Mercaptocarbonsäure Thioglykolsäure verwendet wird.

**Claims**

1. A process for the production of substantially speckfree carboxylated rubber latices of high surface tension by polymerising a monomer mixture of 0.5 to 10% by weight of one or more $\alpha,\beta$-monoethylenically unsaturated mono- or di-carboxylic acids and 90 to 99.5% by weight of a mixture of 10 to 90% by weight of one or more acyclic conjugated dienes containing from 4 to 9 carbon atoms and 10 to 90% by weight of one or more aryl vinyl monomers containing from 8 to 12 carbon atoms and/or (meth)acrylonitrile, the quantity of (meth)acrylonitrile amounting to at most 50% by weight, in the aqueous phase in the presence of from 0 to 0.5% by weight, based on the monomer total, of one or more water-soluble emulsifiers of the sulphate and/or sulphonate type, characterised in that polymerisation is carried out at a temperature above 50° C using a peroxodisulphate as initiator and in the presence of a mercaptocarboxylic acid of the formula

$$HS-(CH_2)_x-CO_2H$$

in which
x is an integer of from 1 to 5,

and/or water-soluble salts thereof.

2. A process according to Claim 1, characterised in that up to 25% by weight of the non-dissociating monomers are replaced by other copolymerisable monomers.

3. A process according to Claims 1 and 2, characterised in that the peroxodisulphate employed as initiator is used in a total quantity of from 0.5 to 3.0% by weight, based on the total quantity of monomers.

4. A process according to Claims 1 to 3, characterised in that it is carried out in the presence of a total of 0.01 to 1.0% by weight of the mercaptocarboxylic acid, based on the total quantity of monomers.

5. A process according to Claims 1 to 4, characterised in that the thioglycolic acid is used as the mercaptocarboxylic acid.

**Revendications**

1. Procédé de fabrication de latex de caoutchouc carboxylés essentiellement exempts de grumeaux et ayant une tension superficielle élevée, par polymérisation d'un mélange de monomères à 0,5 – 10% en poids d'un ou de plusieurs acides mono- ou dicarboxyliques $\alpha,\beta$-monoéthyléniquement insaturés et à 90 – 99,5% en poids d'un mélange à 10 – 90% en poids d'un ou de plusieurs diènes conjugués acycliques ayant 4 à 9 atomes de carbone et à 10 – 90% en poids d'un ou de plusieurs monomères arylvinyliques ayant 8 à 12 atomes de carbone et/ou de (méth)acrylonitrile, la quantité de (méth)acrylonitrile atteignant au maximum 50% en poids, en phase aqueuse en présence de 0 à 0,5% en poids par rapport aux monomères totaux d'un ou de plusieurs émulsifiants solubles dans l'eau du type sulfate et/ou sulfonate, caractérisé en ce qu'on exécute la polymérisation à une température supérieure à 50°C avec utilisation d'un peroxodisulfate comme initiateur en présence d'un acide mercaptocarboxylique de formule:

$$HS-(CH_2)_x-CO_2H$$

dans laquelle
x signifie un nombre entier de 1 à 5,

et/ou de ses sels solubles dans l'eau.

2. Procédé selon la revendication 1, caractérisé en ce qu'on remplace jusqu'à 25% en poids des monomères ne se dissociant pas par d'autres monomères copolymérisables.

3. Procédé selon les revendications 1 et 2, caractérisé en ce que la quantité totale du peroxodisulfate utilisé comme initiateur s'élève à 0,5 – 3,0% en poids par rapport à la quantité totale des monomères.

4. Procédé selon les revendications 1 à 3, caractérisé en ce qu'on l'exécute en présence en tout de 0,01 à 1,0% en poids d'acide mercaptocarboxylique par rapport à la quantité totale des monomères.

5. Procédé selon les revendications 1 à 4, caractérisé en ce qu'on utilise de l'acide thioglycolique en tant qu'acide mercaptocarboxylique.